# EUROPÄISCHE PATENTSCHRIFT

(11) **EP 2 229 254 B1**
(45) Veröffentlichungstag und Bekanntmachung des Hinweises auf die Patenterteilung: **22.04.2015**
(21) Anmeldenummer: 08858078.2
(22) Anmeldetag: 04.12.2008
(51) Int. Cl.: B23B 29/034, B23B 51/02, B23D 77/02

(54) **BOHRWERKZEUG ZUR SPANENDEN BEARBEITUNG VON WERKSTÜCKEN**
BORING TOOL FOR THE MACHINING OF WORKPIECES
OUTIL D'ALÉSAGE DE PIÈCES PAR ENLÈVEMENT DE MATIÈRE

(30) Priorität: 06.12.2007 DE 102007060498; 20.12.2007 DE 102007063204
(43) Veröffentlichungstag der Anmeldung: 22.09.2010
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2008/010261
(87) Internationale Veröffentlichungsnummer: WO 2009/071288

(56) Entgegenhaltungen:
- EP-A1- 0 742 077
- WO-A-96/14954
- WO-A-03/097283
- WO-A-2005/077575
- WO-A-2005/102574

## Beschreibung

Die Erfindung betrifft ein Bohrwerkzeug zur spanenden Bearbeitung von Werkstücken gemäß Oberbegriff des Anspruchs 1 und wie aus der WO 96/14954 A1 bekannt.

Werkzeuge der hier angesprochenen Art sind bekannt. Sie werden beispielsweise eingesetzt, um die Wandung von hohlen Bauteilen zu bearbeiten. Beispielsweise dann, wenn die Wandung in dem bearbeiteten Bereich eine Durchgangsöffnung aufweist, gelangen vom Werkstück abgetragene Späne durch diese Durchgangsöffnung in den von der Wandung umschlossenen Hohlraum. In vielen Fällen ist es relativ aufwändig, beispielsweise bei gegossenen Zylinderköpfen oder Motorblöcken von Verbrennungsmotoren, die Späne aus dem Inneren des Werkstücks zu beseitigen. Gelingt dies nicht vollständig, kann dies zu Funktionsstörungen eines mit dem Zylinderkopf oder Motorblock versehenen Motors führen.

Aufgabe der Erfindung ist daher, ein Werkzeug der eingangs genannten Art zu schaffen, welches diesen Nachteil vermeidet. Zur Lösung dieser Aufgabe wird ein Bohrwerkzeug vorgeschlagen, das die in Anspruch 1 genannten Merkmale umfasst.

Weitere Ausgestaltungen ergeben sich aus den Unteransprüchen.

Die Erfindung wird im Folgenden anhand der Zeichnung näher erläutert. Es zeigen:
- Figur 1: ein erstes Ausführungsbeispiel eines Bohrwerkzeugs zur spanenden Bearbeitung von Werkstücken in perspektivischer Darstellung;
- Figur 2: eine vergrößerte Detailansicht des in Figur 1 dargestellten Bohrwerkzeugs;
- Figur 3: eine Stirnansicht des Bohrwerkzeugs gemäß Figur 1;
- Figur 4: eine perspektivische Vorderansicht eines zweiten Ausführungsbeispiels eines Bohrwerkzeugs und
- Figur 5: eine Stirnseitenansicht des Bohrwerkzeugs gemäß Figur 4.

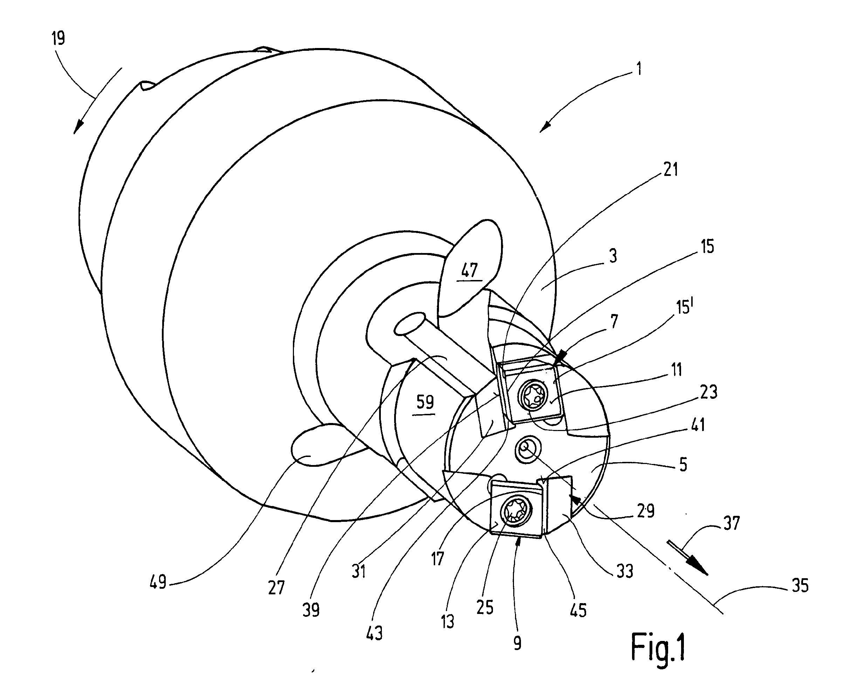

Aus Figur 1 ist ein erstes Ausführungsbeispiel eines Werkzeugs 1 mit einem Grundkörper 3, der hier rein beispielhaft Bereiche mit unterschiedlichen Außendurchmessern aufweist, ersichtlich. In die dem Betrachter zugewandte Stirnseite 5 ist mindestens eine Messerplatte eingesetzt. Bei dem hier dargestellten Ausführungsbeispiel sind zwei Messerplatten 7 und 9 vorgesehen, die quasi tangential in die Stirnseite 5 eingesetzt sind. Das heißt, die dem Betrachter zugewandete Vorderseite 11 der Messerplatte 7 beziehungsweise die Vorderseite 13 der Messerplatte 9 verlaufen im Wesentlichen parallel zur Stirnseite 5. Tatsächlich sind die Messerplatten 7, 9 leicht gekippt, so dass eine Begrenzungskante der Vorderseite 11 beziehungsweise 13 etwas über die Stirnseite 5 hinaus steht. Diese Begrenzungskante bildet eine geometrisch definierte Schneide 15 der Messerplatte 7 beziehungsweise eine Schneide 17 der Messerplatte 9.

Zur Bearbeitung eines Werkstücks wird das Werkzeug 1 in Rotation versetzt und zwar, wie aus Figur 1 ersichtlich, gegen den Uhrzeigersinn. Dies ist durch einen Pfeil 19 angedeutet. Grundsätzlich ist es auch möglich, das Werkstück gegenüber einem feststehenden Werkzeug zu bewegen. Entscheidend ist die Relativbewegung zwischen Werkstück und Schneide 15 beziehungsweise 17.

Bei der Drehbewegung des Werkzeugs 1 werden also Späne von den Schneiden 15 und 17 abgetragen, die auf einer an die Schneiden angrenzenden Spanfläche ablaufen. In Figur 1 ist die der Schneide 15 zugeordnete Spanfläche 21 erkennbar.

Bei dem hier dargestellten Ausführungsbeispiel ist die Spanfläche 21 um die Schneide 15 verkippt, sie schließt also mit der Vorderseite 11 der Messerplatte 7 einen Winkel < 90° ein. Eine derartige Ausgestaltung wird als positiver Spanwinkel bezeichnet.

Die der Schneide 17 der Messerplatte 9 zugeordnete Spanfläche ist in der Darstellung gemäß Figur 1 nicht sichtbar.

Die Messerplatten des Werkzeugs 1 sind bei dem hier dargestellten Ausführungsbeispiel beispielhaft viereckig ausgebildet. Sie können um die Mittelachse einer Spannschraube gedreht werden, falls eine Schneide verschlissen ist.

Der Messerplatte 7 ist eine Spannschraube 23 zugeordnet, die in der Vorderseite 13 der Messerplatte 7 versenkt ist. Entsprechend ist der Messerplatte 9 eine Spannschraube 25 zugeordnet, die in deren Vorderseite 13 versenkt ist.

Grundsätzlich ist es im Übrigen möglich, die hier besprochenen Schneiden 15 und 17 unmittelbar aus dem Grundkörper des Werkzeugs 1 herauszuarbeiten. Ökonomischer ist es jedoch, wie hier beschrieben, Messerplatten 7, 9 mit entsprechenden Schneiden 15, 17 zu verwenden.

In einem Abstand zu der Messerplatte 7 ist ein Spanleitelement 27 zugeordnet; der Messerplatte 9 ist entsprechend ein Spanleitelement 29 zugeordnet. Die Spanleitelemente 27 und 29 sind als Leisten ausgebildet, die in dem Grundkörper 3 versenkt angeordnet sind. Sie sind auf geeignete Weise befestigt, vorzugsweise hartgelötet. Denkbar ist es auch, diese mit Schrauben oder Spannpratzen im Grundkörper 3 des Werkzeugs 1 zu verankern.

Die Spanleitelemente 27 und 29 weisen jeweils eine Vorderseite 31 beziehungsweise 33 auf, die hier beispielhaft flächig mit der Stirnseite 5 des Werkzeugs 1 abschließt. In Richtung der Mittelachse 35 des Werkzeugs 1 und in Richtung der durch einen Doppelpfeil 37 angedeuteten Vorschubrichtung gesehen, eilen die Schneiden 15 und 17 gegenüber den Vorderseiten 31 und 33 der Spanleitelemente 27 und 29 vor. Wesentlich ist, dass die Schneiden 15 und 17 auf jeden Fall weiter über die Stirnseite 5 des Werkzeugs 1 vorstehen, als die Vorderseiten 31 und 33. Insbesondere muss der axiale Abstand zwischen einer durch die Schneiden 15 und 17 parallel zur Stirnfläche 5 verlaufenden Ebene und einer durch die Vorderseiten 31 und 33 der Spanleitelemente 27 und 29 definierten Ebene größer sein als der Vorschub, den das Werkzeug 1 während einer Umdrehung relativ zum Werkstück erfährt.

Bei einer besonders bevorzugten Ausführungsform des Werkzeugs 1 ist vorgesehen, dass der axiale Abstand zwischen den Ebenen, in denen die Schneiden 15 und 17 und die Vorderseiten 31 und 33 der Spanleitelemente 27 und 29 liegen, in einem Bereich von ≥ 0,2 mm bis 0,6 mm liegt. Mit anderen Worten: Die Schneiden eilen - in Vorschubrichtung gesehen - den Vorderseiten um ≥ 0,2 mm bis 0,6 mm vor. Besonders bevorzugt wird eine Voreilung von 0,4 mm. Diese Werte gelten für eine Vorschubgeschwindigkeit von 0,2 mm pro Umdrehung des Werkzeugs 1.

Die hier wiedergegebenen Werte für die Voreilung der Schneiden gegenüber der Vorderseiten der Spanleitelemente werden für ein Werkzeug 1 gewählt, das zwei Schneiden umfasst. Falls allerdings nur eine Schneide vorhanden sein sollte, muss die Vorauseilung doppelt so groß gewählt werden.

Auf der der Messerplatte 7 zugewandten Seite des Spanleitelements 27 ist eine Leitfläche 39 vorgesehen. Entsprechend weist das Spanleitelement 29 auf seiner der Messerplatte 9 zugewandten Seite eine Leitfläche 41 auf.

Zwischen den Schneidkanten 15 und 17 der Messerplatten und den zugehörigen Spanleitelementen 27 und 29 wird ein Aufnahmespalt 43 beziehungsweise 45 gebildet, in den von den Schneiden 15 und 17 abgetragene Späne eintreten.

Bei einem bevorzugten Ausführungsbeispiel des Werkzeugs 1 ist vorgesehen, dass die - in Umfangsrichtung 19 gemessene - Breite des Spalts, also der Abstand zwischen den Schneidkanten 15 und 16 der Messerplatten sowie den Spanleitelementen 27 und 29, in einem Bereich von 0,6 mm bis 1,0 mm liegt. Besonders bevorzugt wird eine Breite von 0,8 mm.

Aus Figur 1 ist noch ersichtlich, dass in dem Grundkörper 3 des Werkzeugs 1 ein Spanraum 47 eingebracht ist, der von der Schneide 15 abgetragene Späne aufnimmt. Entsprechend ist der Schneide 17 der Messerplatte 9 ein Spanraum zugeordnet, von dem hier lediglich ein Auslaufbereich 49 erkennbar ist.

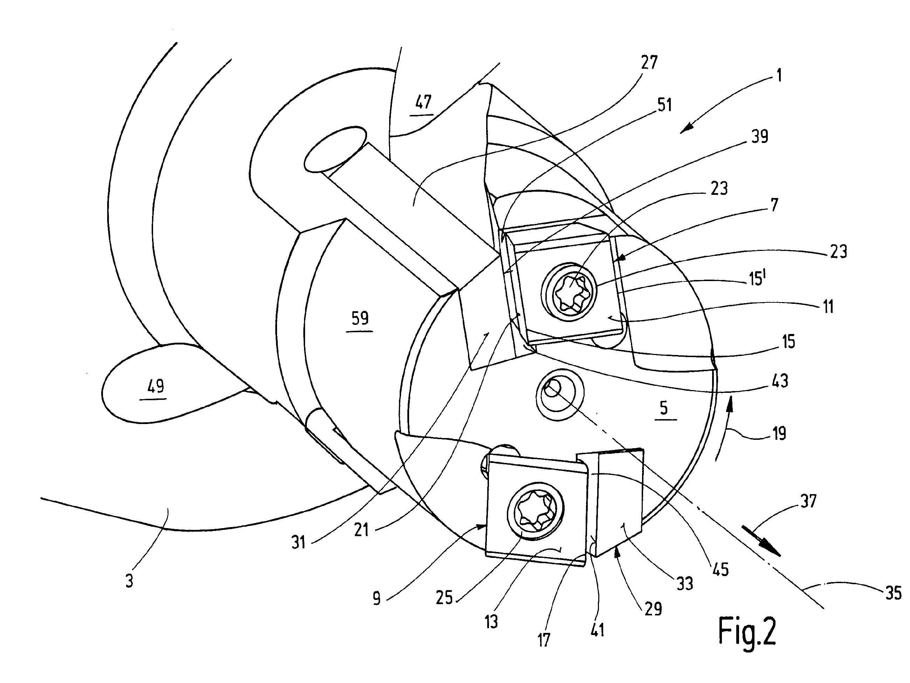

Figur 2 zeigt den vorderen Teil des Werkzeugs 1, wie es in Figur 1 dargestellt ist. Gleiche und funktionsgleiche Teile sind mit gleichen Bezugsziffern versehen, sodass insofern auf die Beschreibung zu Figur 1 verwiesen wird.

Aus Figur 2 ist wiederum ersichtlich, dass das Werkzeug 1 beispielhaft mit zwei Messerplatten 7 und 9 versehen ist. Diese sind im Wesentlichen einander gegenüberliegend in der Stirnseite 5 des Werkzeugs 1 festgespannt mittels der oben beschriebenen Spanschrauben 23 und 25. Im Folgenden wird lediglich auf die in Figur 2 obere Messerplatte 7 eingegangen. Alles hierzu Gesagte gilt entsprechend für die untere Messerplatte 9.

Aus der Vergrößerung wird deutlich, dass die Schneide 15 die Schnittlinie zwischen der Vorderseite 11 und der Spanfläche 21 der Messerplatte 7 bildet. Sie ist in einem Abstand zur Leitfläche 39 des Spanleitelements 27 angeordnet und verläuft vorzugsweise im Wesentlichen parallel zu dieser, sodass hier der Aufnahmespalt 43 mit parallelen Begrenzungslinien gebildet wird.

Die Spanfläche 21 schließt mit der Leitfläche 39 vorzugsweise einen spitzen Winkel ein, der sich ausgehend vom Aufnahmespalt 43 in Richtung zum Spanraum 47 öffnet. Es wird damit zwischen der Spanfläche 21 und der Leitfläche 39 ein Aufnahmekanal 51 gebildet in den die von der Schneide 15 abgetragenen und durch den Aufnahmespalt 43 hindurchgeführten Späne gelangen. Aus dem Aufnahmekanal 51 treten die Späne in den weiteren Spanraum 47 ein.

Das Spanleitelement 27 ist so gegenüber der Messerplatte 7 angeordnet, dass der Lauf der von der Schneide 15 abgetragenen Späne definiert beeinflusst wird: Die Späne stoßen gegen die Leitfläche 39 des Spanleitelements 27 an. Dieses ist so nah an der Messerplatte 7 angeordnet, das heißt, der Aufnahmespalt 43 ist so schmal ausgebildet, dass die Späne gegen die Leitfläche 39 stoßen und von dieser in den Aufnahmekanal 51 und weiter in den Spanraum 47 geleitet werden. Es ist bekannt, dass ein von einer Schneide erzeugter Span auf der Spanfläche 21 grundsätzlich nach hinten, also entgegen der Vorschubrichtung, abläuft. Er hat die Tendenz, sich von der Spanfläche abzulösen und eine Locke zu bilden. In der Praxis hat sich gezeigt, dass diese Locke in Vorschubrichtung wandern und unkontrolliert über die Stirnseite 5 des Werkzeugs 1 vortreten kann. Durch die Verwendung des Spanleitelements 27 wird sichergestellt, dass die Locken nach hinten, also gegen die Vorschubrichtung, abgelenkt und damit in den Aufnahmekanal 51 geführt werden.

Durch diese gezielte Beeinflussung des Spanablaufs wird sichergestellt, dass von der Schneide 15 abgetragene Späne nicht in der durch den Pfeil 37 angedeuteten Vorschubrichtung ablaufen, sondern eben vielmehr entgegengesetzt zur Vorschubrichtung abgelenkt und sicher in den Spanraum 47 geführt werden.

Anhand von Figur 2 wird nochmals darauf hingewiesen, dass die Breite des Aufnahmekanals 51, also der Abstand der Schneide 15 und der zugehörigen Spanfläche 21 zum Spanleitelement 27 beziehungsweise zu dessen Leitfläche 39 so gewählt wird, dass vom Werkstück abgetragene Späne im Aufnahmespalt 43 und Aufnahmekanal 51 eingefangen und in den Spanraum 47 abgeleitet werden.

Wird das Werkzeug 1 zur Bearbeitung von Öffnungen in Wandungen eines Werkstücks verwendet, die einen Hohlraum umschließen, wird durch die gezielte Beeinflussung des Spanablaufs sichergestellt, dass bei der Bearbeitung des Werkstücks keine Späne in dessen Hohlraum gelangen und die Funktion des Werkstücks selbst oder damit zusammenhängender Elemente beinträchtigen. Außerdem bedarf es nach Bearbeitung eines hohlen Werkstücks keiner aufwändigen Reinigungsarbeiten, weil eben die von dem Werkzeug 1 abgetragenen Späne sicher aus dem Bearbeitungsbereich abgeführt und gezielt in den Spanraum 47 geleitet werden.

Dies ist beispielsweise vorteilhaft bei der Bearbeitung von Passsitzen -umgangssprachlich bekannt als Wasserstopfenbohrungen- für die Verschlussdeckel von Kühlkreisläufen beziehungsweise Wasserkreisläufen in Motorblöcken oder Zylinderköpfen.

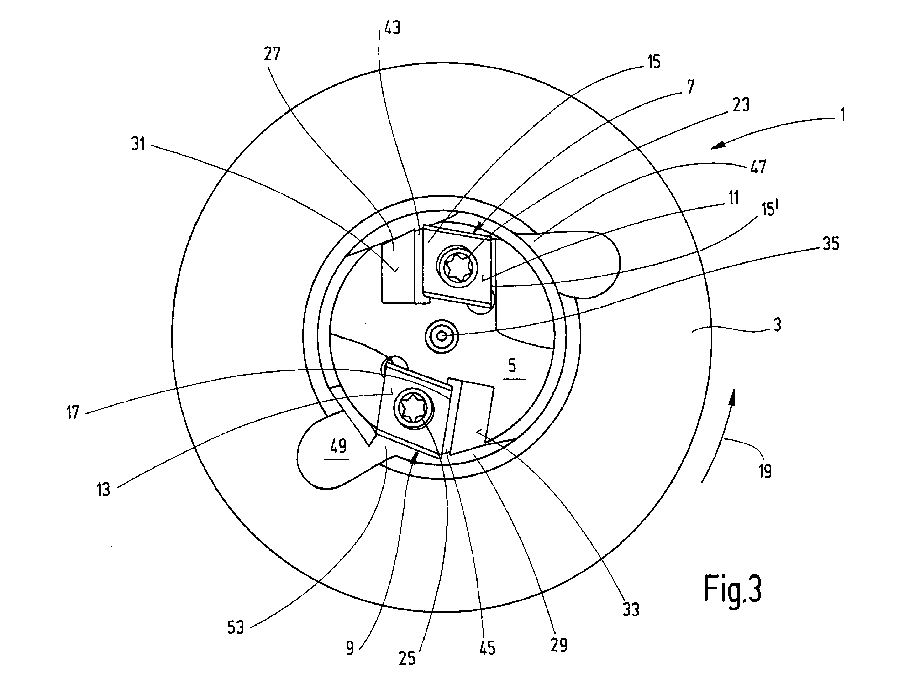

Figur 3 zeigt das anhand der Figuren 1 und 2 erläuterte Werkzeug in Draufsicht. Gleiche und funktionsgleiche Teile sind mit gleichen Bezugsziffern versehen, sodass insofern auf die Beschreibung zu den Figuren 1 und 2 verwiesen wird.

Das Werkzeug 1 ist symmetrisch ausgebildet. Gegenüber der messerplatte 7 ist die Messerplatte 9 angeordnet. Sie werden durch die Spannschrauben 23 und 25 im Grundkörper 3 des Werkzeugs 1 festgespannt. Ihnen sind symmetrische Spanräume zugeordnet, wobei der Spanraum 47 der Messerplatte 7 und der Spanraum 53 mit dem Auslaufbereich 49 der Messerplatte 9 zugeordnet sind.

Aus dieser Perspektive ist deutlich erkennbar, dass zwischen den Messerplatten 7 und 9 und den zugehörigen Spanleitelementen 27 und 29 ein Aufnahmespalt 43 und 45 ausgebildet wird, in den die von den Schneiden 15 und 17 abgetragenen Späne eintreten und senkrecht in die Bildebene von Figur 3 hinein abgeführt werden.

Die Schneidkanten 15 und 17 der Messerplatten 7 und 9 enden in einem Abstand zur Mittelachse 35 des Werkzeugs 1. Dieses ist also nur dazu ausgelegt, ein Werkstück mit einer bereits vorhandenen Bohrung zu bearbeiten. Eine Bearbeitung ins Volle ist also nicht möglich.

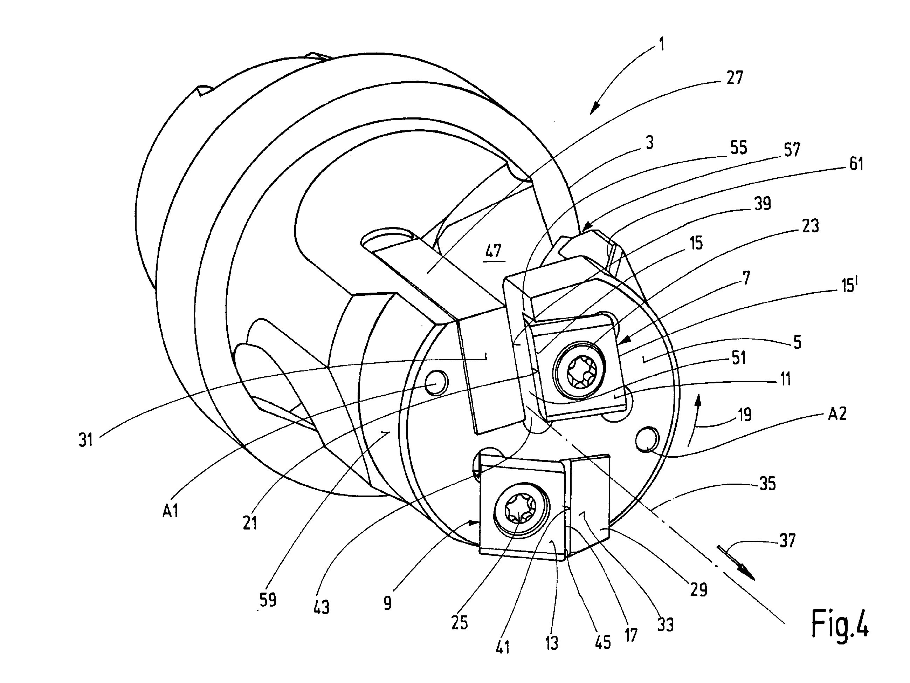

Figur 4 zeigt ein abgewandeltes Ausführungsbeispiel des Werkzeugs 1. Gleiche und funktionsgleiche Teile, die anhand des ersten Ausführungsbeispiels beschrieben wurden, sind hier mit gleichen Bezugsziffern versehen. Insofern wird auf die Beschreibung zu den vorangegangen Figuren verwiesen.

Das Werkzeug 1 weist einen Grundkörper 3 auf, in dessen Stirnseite 5 wiederum zwei Messerplatten 7 und 9 praktisch tangential eingelassen sind, sodass deren Vorderseiten 11 und 13 im Wesentlichen parallel zur Stirnseite 5 verlaufen. Aus dieser Darstellung wird deutlich, dass tatsächlich zwischen der Vorderseite 11 und der Spanfläche 21 der Messerplatte 7 ein Winkel < 90° gegeben ist. Die Messerplatte 7 ist in einer Ausnehmung 55 im Grundkörper 3 des Werkzeugs 1 untergebracht, deren Grund gegenüber der Stirnseite 5 so geneigt ist, dass die Schneide 15 der Messerplatte 7 weiter über die Stirnfläche 5 hinaussteht, als die gegenüberliegende Begrenzungskante 15' der Messerplatte 7. Wie gesagt, ist die Messerplatte 7 als Wendeplatte ausgebildet. Es ist also möglich, die Spannschraube 23 zu lösen und die Messerplatte um die Mittelachse der Spannschraube zu drehen, sodass deren Begrenzungskante 15' an der Stelle der Schneidkante 15 liegt und damit als aktive Schneide wirken kann.

Aus der Darstellung gemäß Figur 4, die das Werkzeug 1 in perspektivischer Vorderansicht wiedergibt, ist ersichtlich, dass die hier untenliegende Messerplatte 9 außen am Rand der Stirnseite 5 liegt, während die Messerplatte 7 so angeordnet ist, dass deren Schneide 15 bis zur Mittelachse 35 des Werkzeugs 1 reicht. Insgesamt überstreichen die Schneide 15 der Messerplatte 7 und die Schneide 17 der Messerplatte 9 einen Arbeitsbereich, der es ermöglicht, mit dem Werkzeug 1 ins Volle zu arbeiten.

Das hier dargestellte Ausführungsbeispiel des Werkzeugs 1 weist noch eine zusätzliche Messerplatte 57 auf, welche in die an die Stirnfläche 5 angrenzende Umfangsfläche 59 des Grundkörpers 3 des Werkzeugs 1 eingesetzt ist und eine Schneide 61 aufweist, mit der beispielsweise eine Fase hergestellt oder bearbeitet werden kann. Dazu steht die Schneide 61 über die Umfangsfläche 59 hinaus.

Der übrige Aufbau des Werkzeugs 1 gemäß Figur 4 entspricht im Wesentlichen dem des Ausführungsbeispiels gemäß den Figuren 1 bis 3. Es ist also auch hier vorgesehen, dass zwischen der Schneide 15 der Messerplatte 7 und der Leitfläche 39 des Spanleitelements 27 ein Aufnahmespalt 43 gebildet wird, in den von der Schneide 15 abgetragene Späne eintreten und über einen Aufnahmekanal in den Spanraum 47 geleitet werden.

Ein entsprechender Aufnahmespalt 45 wird zwischen der Messerplatte 9 und dem Spanleitelement 29 gebildet.

Deutlich ist erkennbar, dass die Breite des Aufnahmespalts 43 größer ist als die des Aufnahmespalts 45. Die Spaltbreite ist angepasst an die von den jeweiligen Schneiden 15 und 17 abgetragenen Späne. Durch die definierte Breite der Aufnahmespalte 43 und 45 wird sichergestellt, dass bei der Bearbeitung eines Werkstücks in Richtung der durch den Doppelpfeil 37 gekennzeichneten Vorschubrichtung keine Späne austreten.

Bei der Bearbeitung eines Werkstücks ist die Relativgeschwindigkeit zwischen der Werkstückoberfläche und der Schneide 17 größer als zwischen der Werkstückoberfläche und der Schneide 15. Daher werden von der Schneide 17 dünnere Späne abgetragen, die sich beim Ablaufen von der Schneide 17 spiralig aufrollen, sodass sogenannte Spanlocken entstehen.

Die weiter zur Mittelachse 35 gelegene Schneide 15 der Messerplatte 7 hat bei der Bearbeitung eines Werkstücks gegenüber der Schneide 17 eine geringere Relativgeschwindigkeit, sodass hier dickere Späne abgetragen werden, die zu Spanlocken mit größerem Durchmesser aufgerollt werden.

Durch die speziell auf die Spanlocken abgestimmte Breite der Aufnahmespalte 43 und 45 wird sichergestellt, dass von den Schneiden abgetragene Späne durch die Aufnahmespalte 43 und 45 und die zugehörigen Aufnahmekanäle bis in die Spanräume 47 beziehungsweise 53 zwangsgeführt werden. Also auch bei der Bearbeitung ins Volle wird sichergestellt, dass keine Späne über die Stirnfläche 5 nach vorne in Vorschubrichtung austreten. Wird also in der Wandung eines hohlen Werkstücks eine Bohrung hergestellt und bearbeitet, werden beim Durchtreten des Werkzeugs 1 durch die Wandung keine Späne in den von der Wandung eingeschlossenen Hohlraum des Werkstücks gelangen.

Auch bei dieser in Figur 4 wiedergegebenen Ausführungsform des Werkzeugs 1 ist also sichergestellt, dass die sich anhand des Ausführungsbeispiels des gemäß den Figuren 1 bis 3 erläuterten Werkzeugs 1 einstellenden Vorteile gegeben sind.

Bei dem in Figur 4 dargestellten Ausführungsbeispiel des Werkzeugs 1 ist eine Kühl-/Schmiermittelversorgung vorgesehen. Das entsprechende Medium wird durch den Grundkörper 3 des Werkzeugs 1 in den Bereich der aktiven Schneiden gefördert. In Figur 4 sind beispielhaft Auslassöffnungen A1 und A2 wiedergegeben, aus denen das Kühl-/Schmiermittel bei Einsatz des Werkzeugs 1 austritt. Es ist ersichtlich, dass die Auslassöffnungen A1 und A2 hier in der Stirnseite 5 des Werkzeugs 1 münden. Denkbar ist es, auch der Messerplatte 57 eine Auslassöffnung zuzuordnen, damit auch diese mit einem Kühl-/Schmiermittel versorgt werden kann.

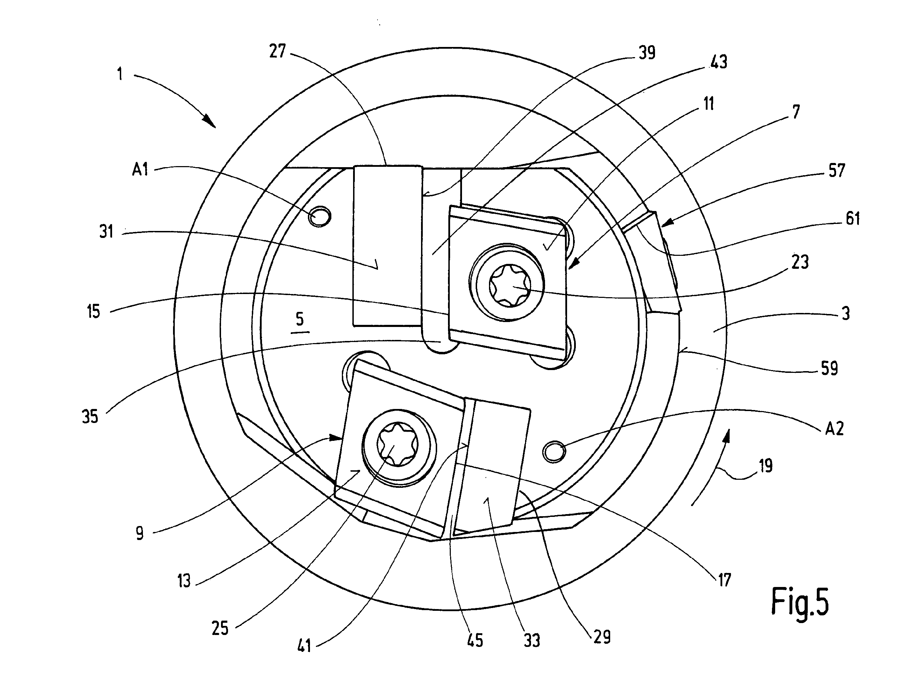

Figur 5 zeigt schließlich das in Figur 4 dargestellte Werkzeug 1 in Stirnansicht. Gleiche und funktionsgleiche Teile, wie sie anhand der Figuren 1 bis 4 erläutert wurden, sind mit gleichen Bezugsziffern versehen. Insofern wird auf die Beschreibung zu den vorangegangen Figuren verwiesen.

Hier wird nochmals deutlich, dass der Abstand der Messerplatte 7 zum zugehörigen Spanleitelement 27 größer ist als der Abstand der Messerplatte 9 zum zugehörigen Spanleitelement 29. Der Aufnahmespalt 43 im Bereich der ersten Messerplatte 7 ist also breiter als der Aufnahmespalt 45 im Bereich der zweiten Messerplatte 9.

Die Darstellung gemäß Figur 5 lässt noch erkennen, dass die dritte Messerplatte 57, wie die Messerplatten 7 und 9, tangential in die Außenfläche des Werkzeugs 1, hier in die Umfangsfläche 59 des Grundkörpers 3 eingesetzt ist.

Aus den Erläuterungen zu den Figuren 1 bis 5 wird deutlich, dass das hier beschriebene Werkzeug 1 sich dadurch auszeichnet, dass von der mindestens einen Schneide, hier von den Schneiden 15 und 17, abgetragene Späne und insbesondere Spanlocken nicht in Richtung der durch den Doppelpfeil 37 angedeuteten Vorschubrichtung ablaufen, sondern vielmehr in den zugehörigen Aufnahmespalten 43 und 45 eingefangen und über Aufnahmekanäle in die Spanräume der Messerplatten gelangen. Es zeigt sich auch, dass der Aufbau des Werkzeugs relativ einfach ist, was zu einer kostengünstigen Realisierung der hier vorgegebenen Aufgabe führt.

Um den Verschleiß der Spanleitelemente 27 und 29 zu reduzieren, ist zumindest deren Leitfläche 39, 41, die den Messerplatten 7, 9 zugewandt ist und auf denen die von den Schneiden 15, 17 abgetragenen Späne ablaufen, mit einem widerstandsfähigen Material beschichtet, sei es Hartmetall oder PKD. Vorzugsweise werden die Spanleitelemente 27 und 29 gänzlich aus Hartmetall hergestellt. Sie werden in den Grundkörper 3 des Werkzeugs 1 eingelötet oder auf geeignete sonstige Weise befestigt.

Im Übrigen sei noch darauf verwiesen, dass das Werkzeug 1 mindestens in dem sich an die Stirnseite 5 anschließenden Umfangsbereich mit mindestens einer Führungsleiste versehen werden kann, über die sich das Werkzeug bei der Beareitung eines Werkstücks an der bearbeiteten beziehungsweise entstehenden Bohrungswandung abstützt.

Die mindestens eine Führungsleiste ist auf ihrer Außenseite, mit der sie mit dem Werkstück in Berührung tritt, mit einem Hartstoff wie zum Beispiel PKD beschichtet, vorzugsweise besteht sie gänzlich aus PKD. Sie ist in den Grundkörper 3 des Werkzeugs 1 eingeklebt oder wird auf sonstige geeignete Weise an diesem befestigt.

Um eine optimale Breite der Aufnahmespalte 43, 45 zu gewährleisten, ist vorzugsweise eine Justiereinrichtung vorgesehen. Diese kann auf die Spanleitelemente 27 oder 29 einwirken, vorzugsweise aber auf die Messerplatten 7 und 9. Auch ist es möglich, beide Teile mit Justiereinrichtungen zu versehen, um die Breite des Aufnahmespalts zu beeinflussen.

Schließlich ist es möglich, die Werkzeuge 1 mit einer Kühl-/Schmiermittelzufuhr zu versehen, über die ein Kühl-/Schmiermittel in den Bearbeitungsbereich der Schneiden gelangt. Bezüglich der Schneiden 15 und 17 der Messerplatten 7 und 9 ist festzuhalten, dass diese im Bereich des Aufnahmespalts 43, 45 angeordnet sind. An diesen schließt sich ein sich vorzugsweise erweiternder Aufnahmekanal 51 an, der in den zugehörigen Spanraum übergeht. Da der Aufnahmespalt der schmalste Bereich ist, in den die von den Schneiden 15 und 17 getragenen Späne eintreten, ergibt sich hier die maximale Fließgeschwindigkeit des Kühl-/Schmiermittels, sodass die gezielte Ableitung der Späne von den Schneiden 15 und 17 in den zugehörigen Spanraum unterstützt wird.

Aus den hier vorliegenden Erläuterungen wird deutlich, dass das Werkzeug 1 mit einer oder auch mehr als zwei Schneiden versehen werden kann. Überdies zeigt sich, dass ein Aufnahmespalt zur gezielten Ableitung der Späne eines Werkstücks auch im Umfangsbereich eines Werkzeugs vorgesehen werden kann.

## Patentansprüche

1. Bohrwerkzeug (1) zur spanenden Bearbeitung von Werkstücken mit it
- einem Grundkörper (3),
- mindestens einer geometrisch definierten Schneide (15,17), an die eine Spanfläche (21) angrenzt,
- einem der Schneide zugeordneten Spanraum (47,53) zur Aufnahme der von der Schneide (15,17) abgetragenen Späne, wobei der Spanraum (47,53) in den Grundkörper (3) des Werkzeugs (1) eingebracht ist, und mit
- einem der Schneide (15,17) zugeordneten Spanleitelement (27,29),
**dadurch gekennzeichnet, dass**
- die Schneide (15,17) mit dem Spanleitelement (27,29) einen Aufnahmespalt (43,45) bildet, der in den Spanraum (47,53) übergeht, und in den die von der Schneide (15,17) abgetragenen Späne eingeleitet werden, dass
- das Spanleitelement (27,29) eine Leitfläche (39,41) aufweist, die mit der Spanfläche (21) einen Aufnahmekanal (51) bildet, der an den Aufnahmespalt (43,45) angrenzt, und dass
- die Spanfläche (21) und die Leitfläche (39,41) einen spitzen Winkel miteinander einschließen, der sich ausgehend vom Aufnahmespalt (43,45) in Richtung auf den Spanraum (47,53) erweitert.

2. Werkzeug (1) nach Anspruch 1, **dadurch gekennzeichnet, dass** sich der Spanraum (47,53) ausgehend vom Aufnahmespalt (43,45) zumindest bereichsweise erweitert.

3. Werkzeug (1) nach einem der vorhergehenden Ansprüche, **dadurch gekennzeichnet, dass** die Breite des Aufnahmespalts (43,45) kleiner als die Weite des angrenzenden Spanraums (47,53) ist.

4. Werkzeug (1) nach einem der vorhergehenden Ansprüche, **dadurch gekennzeichnet, dass** der axiale Abstand zwischen einer der durch die Schneiden (15,17) parallel zur Stirnfläche (5) verlaufenden Ebene und einer durch die Vorderseiten (31,33) der Spanleitelemente (27,29) definierten Ebene größer ist als der Vorschub, den das Werkzeug (1) während einer Umdrehung relativ zum Werkstück erfährt.

5. Werkzeug (1) nach einem der vorhergehenden Ansprüche, **dadurch gekennzeichnet, dass** der Aufnahmespalt (43,45) eine Breite aufweist, die kleiner ist als der Durchmesser einer von der Schneide (15,17) gebildeten Spanlocke.

6. Werkzeug (1) nach einem der vorhergehenden Ansprüche, **dadurch gekennzeichnet, dass** die mindestens eine Schneide (15,17) Teil einer Messerplatte (7,9) ist.

7. Werkzeug (1) nach Anspruch 5, **dadurch gekennzeichnet, dass** die Messerplatte (7,9) tangential in die Stirnseite (5) des Werkzeugs (1) einsetzbar ist.

8. Werkzeug (1) nach Anspruch 5 oder 6, **gekennzeichnet durch** eine mit der mindestens einen Messerplatte (7,9) oder dem zugehörigen Spanleitelement (27,29) zusammenwirkende Justiereinrichtung.

9. Werkzeug (1) nach Anspruch 7, **dadurch gekennzeichnet, dass** mittels der Justiereinrichtung die Breite des Aufnahmespalts (43,45) einstellbar ist.

10. Werkzeug (1) nach einem der vorhergehenden Ansprüche, **dadurch gekennzeichnet, dass** das Spanleitelement (27,29) als in den Grundkörper (3) des Werkzeugs (1) eingesetzte Leiste realisierbar ist.

11. Werkzeug (1) nach Anspruch 9, **dadurch gekennzeichnet, dass** die Leiste Hartmetall aufweist, vorzugsweise aus Hartmetall besteht.

12. Werkzeug (1) nach einem der vorhergehenden Ansprüche, **dadurch gekennzeichnet, dass** die Leitfläche (39,41) des Spanleitelements (27,29) eine Beschichtung aus PKD aufweist.

13. Werkzeug (1) nach einem der vorhergehenden Ansprüche, **dadurch gekennzeichnet, dass** der Spanraum (47,53) entlang einer gedachten Schraubenlinie verläuft.

14. Werkzeug (1) nach einem der vorhergehenden Ansprüche, **dadurch gekennzeichnet, dass** mindestens eine Führungsleiste vorgesehen ist.

15. Werkzeug (1) nach Anspruch 13, **dadurch gekennzeichnet, dass** die Führungsleiste PKD aufweist, vorzugsweise aus PKD besteht.

16. Werkzeug (1) nach einem der vorhergehenden Ansprüche, **gekennzeichnet durch**, eine Kühl-/Schmiermittelversorgung mit wenigstens einem Kühl-/Schmiermittelkanal.

17. Werkzeug (1) nach Anspruch 16, **dadurch gekennzeichnet, dass** der mindestens eine Kühl-/Schmiermittelkanal der Kühl-/Schmiermittelversorgung in der Stirnseite (5) des Werkzeugs (1) mündet.

## Claims

1. Drilling tool (1) for machining workpieces, comprising
- a base body (3),
- at least one geometrically defined cutting edge (15, 17) on which a face (21) abuts,
- a chip space (47, 53) associated with the cutting edge for receiving the chips removed by the cutting edge (15, 17), wherein the chip space (47, 53) is introduced into the base body (3) of the tool (1), and with
- a chip guide element (27, 29) associated with the cutting edge (15, 17),
**characterized in that**
- the cutting edge (15, 17) together with the chip guide element (27, 29) forms a receiving gap (43, 45) which merges into the chip space (47, 53) and into which the chips removed by the cutting edge (15, 17) are introduced, that
- the chip guide element (27, 29) has a guide surface (39, 41) which, together with the face (21), forms a receiving channel (51) which abuts the receiving gap (43, 45), and that
- face (21) and the guide surface (39, 41) form an acute angle with respect to one another which increases toward the chip space (47, 53), starting from the receiving gap (43, 45).

2. Tool (1) according to Claim 1, **characterized in that** the chip space (47, 53), starting from the receiving gap (43, 45), is expanded at least in places.

3. Tool (1) according to one of the preceding claims, **characterized in that** the width of the receiving gap (43, 45) is smaller than the width of the adjacent chip space (47, 53).

4. Tool (1) according to one of the preceding claims, **characterized in that** the axial distance between a plane extending through the cutting edges (15, 17), parallel to the end face (5), and a plane defined by the front sides (31, 33) of the chip guide elements (27, 29) is greater than the advance which the tool (1) undergoes during one revolution relative to the workpiece.

5. Tool (1) according to one of the preceding claims, **characterized in that** the width of the receiving gap (43, 45) is smaller than the diameter of a helical chip produced by the cutting edge (15, 17).

6. Tool (1) according to one of the preceding claims, **characterized in that** the at least one cutting edge (15, 17) is part of a cutting bit (7, 9).

7. Tool (1) according to Claim 5, **characterized in that** the cutting bit (7, 9) may be tangentially inserted into the end face (5) of the tool (1).

8. Tool (1) according to Claim 5 or 6, **characterized by** an adjusting device which cooperates with the at least one cutting bit (7, 9) or the associated chip guide element (27, 29).

9. Tool (1) according to Claim 7, **characterized in that** the width of the receiving gap (43, 45) may be adjusted using the adjusting device.

10. Tool (1) according to one of the preceding claims, **characterized in that** the chip guide element (27, 29) may be implemented as a strip inserted into the base body (3) of the tool (1).

11. Tool (1) according to Claim 9, **characterized in that** the strip contains hard metal, and preferably is composed of hard metal.

12. Tool (1) according to one of the preceding claims, **characterized in that** the guide surface (39, 41) of the chip guide element (27, 29) has a coating made of PCD.

13. Tool (1) according to one of the preceding claims, **characterized in that** the chip space (47, 53) extends along an imaginary helix.

14. Tool (1) according to one of the preceding claims, **characterized in that** at least one guide strip is provided.

15. Tool (1) according to Claim 13, **characterized in that** the guide strip contains PCD, and preferably is composed of PCD.

16. Tool (1) according to one of the preceding claims, **characterized by** a coolant/lubricant supply having at least one coolant/lubricant channel.

17. Tool (1) according to Claim 16, **characterized in that** the at least one coolant/lubricant channel of the coolant/lubricant supply opens into the end face (5) of the tool (1).

## Revendications

1. Outil d'alésage (1) pour l'usinage de pièces par enlèvement de copeaux, comprenant
- un corps de base (3),
- au moins une lame (15, 17) définie géométriquement avec une face de coupe (21) adjacente,
- un espace de copeaux (47, 53) attribué à la lame, pour recevoir les copeaux enlevés par la lame (15, 17), sachant que l'espace de copeaux (47, 53) est inséré dans le corps de base (3) de l'outil (1), et comprenant
- un élément de guidage de copeaux (27, 29) attribué à la lame (15, 17),
**caractérisé en ce que**
- la lame (15, 17) forme une fente de réception (43, 45) avec l'élément de guidage de copeaux (27, 29) qui passe dans l'espace de copeaux (47, 53) et dans lequel les copeaux enlevés par la lame (15, 17) sont introduits, que
- l'élément de guidage de copeaux (27, 29) présente une face de guidage (39, 41) qui forme un canal de réception (51) avec la face de coupe (21), lequel avoisine la fente de réception (43, 45) et que
- la face de coupe (21) et la face de guidage (39, 41) incluent entre elles un angle aigu qui s'élargit en direction de l'espace de copeaux (47, 53) en partant de la fente de réception (43, 45).

2. Outil (1) selon la revendication 1, **caractérisé en ce que** l'espace de copeaux (47, 53) s'élargit au moins par tronçons en partant de la fente de réception (43, 45).

3. Outil (1) selon l'une des revendications précédentes, **caractérisé en ce que** la largeur de la fente de réception (43, 45) est inférieure à la portée de l'espace de copeaux (47, 53) adjacent.

4. Outil (1) selon l'une des revendications précédentes, **caractérisé en ce que** l'écart axial entre un des plans passant à travers les lames (15, 17) parallèlement à la face avant (5) et un plan défini par les faces avant (31, 33) des éléments de guidage de copeaux (27, 29) est supérieur à l'avancement que subit l'outil (1) pendant une rotation par rapport à la pièce.

5. Outil (1) selon l'une des revendications précédentes, **caractérisé en ce que** la fente de réception (43, 45) présente une largeur qui est inférieure au diamètre d'un copeau hélicoïdal formé par la lame (15, 17).

6. Outil (1) selon l'une des revendications précédentes, **caractérisé en ce que** l'au moins une lame (15, 17) fait partie d'une plaque de couteaux (7, 9).

7. Outil (1) selon la revendication 5, **caractérisé en ce que** la plaque de couteaux (7, 9) peut être insérée tangentiellement dans le côté avant (5) de l'outil (1).

8. Outil (1) selon la revendication 5 ou 6, **caractérisé par** un dispositif d'ajustage coopérant avec l'au moins une plaque de couteaux (7, 9) ou l'élément de guidage de copeaux (27, 29) correspondant.

9. Outil (1) selon la revendication 7, **caractérisé en ce que** la largeur de la fente de réception (43, 45) peut être réglée au moyen du dispositif d'ajustage.

10. Outil (1) selon l'une des revendications précédentes, **caractérisé en ce que** l'élément de guidage de copeaux (27, 29) peut être réalisé en tant que baguette insérée dans le corps de base (3) de l'outil (1).

11. Outil (1) selon la revendication 9, **caractérisé en ce que** la baguette présente du métal dur, est de préférence en métal dur.

12. Outil (1) selon l'une des revendications précédentes, **caractérisé en ce que** la face de guidage (39, 41) de l'élément de guidage de copeaux (27, 29) présente un revêtement en PCD.

13. Outil (1) selon l'une des revendications précédentes, **caractérisé en ce que** l'espace de copeaux (47,53) passe le long d'une hélice imaginaire.

14. Outil (1) selon l'une des revendications précédentes, **caractérisé en ce qu'**au moins une baguette de guidage est prévue.

15. Outil (1) selon la revendication 13, **caractérisé en ce que** la baguette de guidage présente du PCD, est de préférence fabriquée en PCD.

16. Outil (1) selon l'une des revendications précédentes, **caractérisé par** une alimentation en réfrigérant/lubrifiant avec au moins un canal de réfrigérant/lubrifiant.

17. Outil (1) selon la revendication 16, **caractérisé en ce que** l'au moins un canal de réfrigérant/lubrifiant de l'alimentation en réfrigérant/lubrifiant débouche dans le côté avant (5) de l'outil (1).
